# EUROPÄISCHE PATENTSCHRIFT

(11) **EP 0 541 954 B1**
(45) Veröffentlichungstag und Bekanntmachung des Hinweises auf die Patenterteilung: **28.02.1996**
(21) Anmeldenummer: 92117028.8
(22) Anmeldetag: 06.10.1992
(51) Int. Cl.: A23L 1/164, A21D 13/00, A21D 13/04

(54) **Verfahren zur Teigbereitung**
Preparation of dough
Préparation de pâte

(30) Priorität: 12.11.1991 DE 4137161
(43) Veröffentlichungstag der Anmeldung: 19.05.1993
(73) Patentinhaber: A. STEPHAN U. SÖHNE GMBH & CO., D-31789 Hameln (DE)
(72) Erfinder: Reeg, Peter, W-3250 Hameln 1 (DE)
(74) Vertreter: Gramm, Werner, Prof., Dipl.-Ing.

(56) Entgegenhaltungen:
- GB-A- 1 041 932
- US-A- 2 916 378
- US-A- 3 046 139
- US-A- 3 404 986
- US-A- 3 687 685
- US-A- 3 690 893
- US-A- 3 694 224
- US-A- 4 737 371
- Section Ch, Week 9007, Derwent Publications Ltd., London, GB; Class D11, AN 90- 045206

## Beschreibung

Die Erfindung betrifft ein Verfahren zur Teigbereitung, insbesondere eines Maisteiges zur Herstellung von Snack Food, wie z. B. Maischips, Tortillas, Tacohüllen oder dergleichen, wobei gemahlenes Getreide mit Wasser vermischt, diese Mischung erwärmt und die Masse dann abgekühlt wird.

Bei bekannten Verfahren zur Herstellung eines Maisteiges erfolgt die Erwärmung der Mischung auf über 70° C, vorzugsweise bis auf 90° C. Dieser Erwärmungsphase schließt sich eine zum Gelieren und Quellen dienende Haltezeit an, worauf dann zum Beenden des Kochvorganges eine sehr schnelle (abrupte) Abkühlung auf etwa 66° C erfolgt. Dann schließt sich eine etwas langsamere weitere Abkühlung an auf Temperaturen von 35° C bis 43° C. Während der gesamten Abkühlung wird Feuchtigkeit entzogen.

Die nach diesem bekannten Verfahren hergestellte CORN MASA (roher Maisteig) läßt sich nicht auf herkömmlichen Walzen zum Ausstanzen der Produkte weiterverarbeiten z. B. zu Maischips, Tortillas oder dergleichen. Möglich ist nur die Verwendung von besonderen Ausrollanlagen aus der Keksindustrie, die eine Handhabung eines klebrigen Produktes zulassen.

Das Dokument Section Ch, Week 9007 Derwent Publications Ltd., London GB; AN 90-045206 & AU-D-3 676 289 offenbart ein Verfahren zur Dehydratisierung von Getreidemehl. Hierzu wird eine Mischung aus Getreide, Wasser und einer Base auf eine erste Temperatur erwärmt, die unterhalb der Geliertemperatur der Mischung liegt. Dann erfolgt eine Erwärmung auf eine zweite Temperatur, die bei oder über der Temperatur liegt, bei der das Perikarp des Getreide bricht. Die Mischung wird auf dieser zweiten Temperatur über eine Zeitdauer gehalten, die zum Brechen des Perikarp ausreicht, andererseits aber kurz genug ist, um ein Gelieren zu verhindern oder zu minimieren. Dann wird die Mischung auf eine dritte Temperatur gebracht, die nicht höher liegt als die erste Temperatur, um eine weitere Gelierung zu verhindern. Die Mischung wird dann in Wasser oder einer wässrigen Base gehalten, bis das Getreide das Wasser absorbiert hat. Anschließend wird dann das Perikarp entfernt und die Mischung wird gemahlen zu Getreidemehl, das auf einen vorgegebenen Wert dehydratisiert ist.

Der Erfindung liegt die Aufgabe zugrunde, das eingangs erläuterte Verfahren zu verbessern.

Diese Aufgabe wird erfindungsgemäß dadurch gelöst, daß die Erwärmung der Mischung auf eine Temperatur zwischen 50 °C und 70 °C, also nur etwas oberhalb der Geliertemperatur der Mehlstärke erfolgt, und die Abkühlung der Masse bereits nach nur teilweiser Gelierung der Mehlstärke eingeleitet wird.

Die Erfindung beruht auf der Erkenntnis, daß sich die Nachteile der vorbekannten Verfahren im wesentlichen aus einem sehr hohen Gelieranteil der Mehlstärke ergeben. Dies ist die Folge der hohen und verhältnismäßig lang andauernden Erwärmung der Ausgangsmischung auf eine weit oberhalb der eigentlichen Geliertemperatur liegende Endtemperatur.

Bei der Herstellung eines Maisteiges wird erfindungsgemäß die Erwärmung der Ausgangsmischung auf eine Maximaltemperatur von 70 °C begrenzt; vorzugsweise erfolgt die Erwärmung lediglich auf 58 °C. Die Gelierung der Kornstärke setzt bei etwa 50 °C ein. Durch Versuche konnte festgestellt werden, daß bei einer Temperatur von etwa 58 °C ein ausreichender Anteil der Maisstärke geliert ist, während eine Überschreitung der Temperatur von 70 °C einen zu hohen Gelieranteil und dadurch eine klebrige Maismasse erzeugt.

Grundsätzlich ist es möglich, nach dem erfindungsgemäßen Verfahren verschiedene Getreidesorten bzw. Mischungen hiervon aufzubereiten. Vorzugsweise wird jedoch Mais verwendet und zwar in einer Mahlung, wie sie sich auf herkömmlichen Steinmühlen ergibt. Demnach soll der gemahlene Mais in einer Mischung aus feinem Mehl und Partikeln bis zu 2 mm Durchmesser verwendet werden. Die richtige Verteilung ist wichtig für die erforderliche Wasserabsorption sowie den Austausch des Wassers durch Öl beim späteren Fritiervorgang. Verwendet wird vorzugsweise ein Maisverschnitt, der weniger Anteile der äußeren Maiskernhülle (paricarp layer), jedoch mehr harte Stärke aufweist.

In einem bevorzugten Verfahren wird der Ausgangsmischung die gesamte Rezeptwassermenge zugegeben. Jedoch ist es grundsätzlich auch möglich, der Ausgangsmischung nur einen Teil der Rezeptwassermenge und die restliche Wassermenge erst in der Kühlphase zuzugeben.

Für die chemische Umsetzung ist die Zugabe von Kalk zweckmäßig, der vorzugsweise in Form von Calciumhydroxyd der Ausgangsmischung zugegeben wird und zwar in einer solchen Menge, daß sich in der hergestellten Maismasse ein pH-Wert von etwa 9.0 bis 11.0 einstellt. Der Kalkzusatz beeinflußt auch in vorteilhafter Weise den Geschmack des Fertigerzeugnisses.

Die Mischung der Ausgangszutaten zu einer homogenen Masse (Mischphase) erfolgt bei Raumtemperatur und vorzugsweise mit schnell umlaufenden Mischwerkzeugen über einen Zeitraum von weniger als 1 Minute. Dieser Mischphase kann sich eine Haltezeit (erste Haltezeit) anschließen, um ein Wässern des Maises und eine Reaktion des Kalkes mit dem Mais zu gewährleisten. Jedoch wurde in Versuchen festgestellt, daß auf diese Haltezeit ggf. auch verzichtet werden kann.

Erfindungsgemäß ist es vorteilhaft, wenn die Erwärmung der Mischung vorwiegend durch von Mischwerkzeugen in die Mischung eingebrachte Reibungswärme erfolgt. Hierfür werden vorzugsweise schnell umlaufende, breitflächige Mischwerkzeuge verwendet, die durch in der Mischung erzeugte Reibung die homogene Masse auf eine Endtemperatur von vorzugsweise 58 °C bringen. Gegenüber der ebenfalls möglichen Erwärmung der Mischung durch direkte Einleitung von Dampf in die Mischung hat die Erwärmung der Mischung allein durch Reibungswärme den Vorteil, daß der Feuchtigkeitsgehalt der Mischung unverändert bleibt und sich eine stetige und gleichförmige Erwärmung ergibt.

Grundsätzlich sind auch andere Aufheizverfahren einsetzbar wie z. B. die Verwendung eines doppelwandigen, beheizten Kessels, die Erwärmung durch Microwellen oder dergleichen. Wesentlich für alle Aufwärmprozesse ist jedoch, die bei etwa 50 °C einsetzende Gelierung der Stärke so rechtzeitig abzubrechen, daß sich eine Maismasse mit bestimmtem Teigcharakter ergibt, die je nach Fertigprodukt unterschiedlich stark geliert sein kann.

Bei bestimmten Verfahren hat es sich als vorteilhaft erwiesen, nach dem Erreichen der Endtemperatur von z. B. 58 °C eine Haltezeit von etwa 1 Minute vorzusehen, während der die erwärmte Masse in Ruhe bleibt und nicht mehr zusätzlich erwärmt wird. Hierdurch läßt sich innerhalb der Masse ein Temperaturausgleich sowie eine gleichmäßige Gelierung erreichen.

Die Abkühlung erfolgt auf eine Temperatur unterhalb der Temperatur, bei der die Gelierung der Stärke einsetzt, also auf eine Temperatur < 50 °C, vorzugsweise auf 43 °C. Diese Abkühlung soll erfindungsgemäß schnell, vorzugsweise über einen Zeitraum von 3,5 Minuten durchgeführt werden. Durch die Abkühlung wird die Gelierung unterbrochen. Dabei kann die Abkühlung z. B. durch Anlegen von Vakuum im Rahmen eines Vakuum-Kondensator-Systems erfolgen.

Während der Abkühlphase darf die Masse nicht zu sehr von umlaufenden Mischwerkzeugen beaufschlagt werden, da sich andernfalls eine klebrige Maismasse ergibt. Es ist daher zweckmäßig, die Mischbeaufschlagung nur in Intervallen erfolgen zu lassen, wobei z. B. die Mischwerkzeuge alle 30 Sekunden für nur etwa 3 Sekunden umlaufen. Es ist aber auch möglich, die Mischwerkzeuge mit nur sehr niedriger Geschwindigkeit kontinuierlich umlaufen zu lassen.

Soweit zu Beginn des Verfahrens nur ein Teil der Rezeptwassermenge zugegeben worden war, kann die restliche Wassermenge während der Kühlphase zugegeben werden, wodurch ein Kühleffekt hervorgerufen wird. Zur Einmischung der zugegebenen Wassermenge in die Masse ist eine Mischung der Masse erforderlich.

Hierzu können die Mischwerkzeuge hochtourig für etwa eine halbe Minute umlaufen.

Ein großer Vorteil des erfindungsgemäßen Verfahrens ist darin zu sehen, daß das gesamte Verfahren vollautomatisch in einem Kessel durchgeführt werden kann, einschließlich des automatischen Austragens der Maismasse. Dies gewährleistet eine gleichmäßige Konsistenz sowie gleichen Geschmack der Maismasse. Letztere ergibt sich am Ende des erfindungsgemäßen Verfahrens als kalter, dichter, etwas kohäsiver, aber nicht klebriger, maschinenfreundlicher Teig mit einem Feuchtigkeitsgehalt von etwa 46 % bis 52 % und einem pH-Wert von etwa 9.0 bis 11.0.

Das erfindungsgemäße Verfahren läßt sich vorzugsweise durchführen auf einer Stephan-Maschine des Typs UMM/SK 44 E Pilot oder auf einer größeren Stephan-Combicut-Maschine. Diese Maschinen weisen breite Mischblätter auf, die in ihrer Arbeitsphase mit mindestens 1000 bis 3600 Umdrehungen pro Minute umlaufen. Die Maschinen sind ferner ausgestattet mit einem die Kesselwandungen abschabenden Umwälzwerkzeug, das üblicherweise mit 26 Umdrehungen pro Minute angetrieben wird.

Auf einer derartigen Stephan-Maschine läßt sich CORN MASA nach z. B. folgendem Verfahren herstellen:
Rezeptbestandteile sind 9 kg spezialgemahlener und verschnittener Mais, 7,2 kg Wasser und 30 g Calciumhydroxyd. Diese Bestandteile werden 60 Sekunden lang durch mit 1750 Umdrehungen pro Minute umlaufende Mischwerkzeuge (und ggf. zusätzlich durch ein gleichzeitig mit 26 Umdrehungen pro Minute umlaufendes Umwälzorgan) bei einer Raumtemperatur von etwa 23 °C zu einer homogenen Masse vermischt. Es schließt sich eine Haltezeit von 5 bis 10 Minuten an, in der keinerlei Mischbeaufschlagung erfolgt. Anschließend erfolgt eine Erwärmung der Masse auf 58 °C und zwar allein durch Reibungswärme, die durch mit 1750 Umdrehungen pro Minute umlaufende Mischwerkzeuge über einen Zeitraum von etwa 8 Minuten in die Masse eingebracht wird. Alternativ kann die Erwärmung durch direkte Einleitung von trockenem Wasserdampf mit einem Druck von 2 bar direkt in die zu erwärmende Masse erfolgen. Nach Erreichen der gewünschten Endtemperatur von 58 °C in der Masse schließt sich eine zweite Haltezeit von etwa 1 Minute an, während der weder eine Mischbeaufschlagung noch eine weitere Aufheizung der Masse erfolgt. Anschließend erfolgt eine schnelle Abkühlung der Masse von 58 °C auf 43 °C und zwar über einen Zeitraum von etwa 3,5 Minuten durch Vakuum-Kondensator-Kühlung. Während dieser Abkühlphase laufen die Mischwerkzeuge nur in Intervallen um, z. B. alle 30 Sekunden für jeweils 3 Sekunden mit 1750 Umdrehungen pro Minute. Bei entsprechender Einrichtung der Maschine können die Mischwerkzeuge aber auch ständig umlaufen mit einer Kriechgeschwindigkeit von etwa 55 Umdrehungen pro Minute. Wird jedoch während dieser Kühlphase noch eine Restwassermenge zugeführt, ist ein zusätzlicher Mischgang erforderlich, für den man die Werkzeuge mit 1750 Umdrehungen pro Minute für etwa 30 Sekunden umlaufen läßt.

Das erfindungsgemäße Verfahren läßt sich insbesondere durchführen auf Maschinen der Firma A. Stephan u. Söhne GmbH & Co. und zwar insbesondere auf Combicuts mit Vakuumeinrichtung und Kondensator, wobei der Trommelinhalt dieser Maschinen 200 l bis 1500 l betragen kann.

Das Fortschreiten des sich bei dem erfindungsgemäßen Verfahren einstellenden Prozesses läßt sich in einfacher Weise sehr genau kontrollieren, da das fortschreitende Gelieren und/oder Quellen der abgegebenen Motorleistung des Hauptmotors direkt proportional ist. Über entsprechende marktübliche Leistungsmeßgeräte kann daher in einfacher Weise eine Kontrolle vorgenommen werden.

Anstelle von Kalk bzw. Calciumhydroxid kann erfindungsgemäß auch vorgesehen werden, daß der Ausgangsmischung eine nahrungsmittelgeeignete Säure, z. B. Phosphor-, Fumar-, Zitronen-, Äpfel- und Ascorbinsäure, oder eine in vergleichbarer Weise auf die Hydroxylgruppe der Stärke einwirkende Verbindung wie z. B. Epichlorhydrin, Phosphoroxychlorid, Acrolein, Natriumtrimetaphosphat, Bernsteinsäureanhydrid, Adipinanhydrid, Essigester und Hydroxypropylester zugegeben wird. Bei letzterem handelt es sich um eine modifizierte Stärke und zwar um ein Amylopectin und/oder seine Derivate. Dabei ist es zweckmäßig, wenn der Ausgangsmischung bezogen auf deren Gewicht etwa 0,4 Gew.% einer 75 %igen nahrungsmittelgeeigneten Säure o. dgl. zugegeben wird.

Diese Zugabe wirkt sich besonders vorteilhaft auf die Struktur und die Farbe des hergestellten Teiges aus. Dieser Effekt beruht offenbar auf einer Vernetzung oder Substitution der Hydroxylgruppen in der Maisstärke. Ferner führt die genannte Zugabe zu einer Herabsetzung des pH-Wertes des Teiges, wobei dieser pH-Wert zwischen 3.0 und 11.0 liegen kann, vorzugsweise aber eingestellt wird auf 6.0 bis 8.0.

Unter Verwendung einer der vorstehend genannten Zutaten hat sich nachfolgendes Verfahren als zweckmäßig herausgestellt:
60 g einer 75 %igen nahrungsmittelgeeigneten Phosphorsäure werden vermischt mit 7 kg Wasser; dann werden 9 kg gemahlener Mais gewünschter Partikelgröße zugegeben. Diese Ausgangsmischung wird durch mit 1750 Umdrehungen/Minute umlaufende Mischwerkzeuge erwärmt bis auf eine Temperatur von 57 °C. Dann werden 50 g Calciumhydroxid zugegeben; die Mischung wird mit 1750 Umdrehungen/Minute fortgeführt bis zur Erreichung der Endtemperatur von 61 °C. Durch Vakuum-Kondensator-Kühlung wird die Masse auf etwa 37 °C abgekühlt.

In einem erneut abgewandelten Verfahren werden 9 kg Mais, und 7,2 kg Wasser mit 30 g Calciumhydroxid vermischt. Die Mischung und die hierdurch bewirkte Erwärmung erfolgt wiederum mit Hilfe von mit 1750 Umdrehungen/Minute umlaufenden Mischwerkzeugen. Nach Erreichung einer Mischungstemperatur von 52 °C wird die Maschine stillgesetzt; der Mischung werden etwa 40 g Fumarsäure in Pulverform zugegeben. Nach Wiedereinstellen der Mischwerkzeuge erfolgt die weitere, wiederum durch Reibung erzeugte Erwärmung der Mischung bis auf eine Endtemperatur von etwa 65 °C. Die Vakuum-Kondensator-Kühlung reduziert die Teigtemperatur auf etwa 37 °C.

Für die beiden vorstehend beschriebenen Verfahren gilt im übrigen der gleiche Prozeßablauf, wie er zu dem ersten Verfahrensbeispiel beschrieben wurde. Vorgesehen sind also jeweils eine erste Haltezeit von 5 bis 10 Minuten, eine zweite Haltezeit von 1 bis 5 Minuten und eine Abkühlphase von etwa 3,5 Minuten.

Der Wassergehalt sollte erfindungsgemäß nicht über 50 Gew.% der Ausgangsstoffe liegen.

## Patentansprüche

1. Verfahren zur Teigbereitung, insbesondere eines Maisteiges zur Herstellung von Snack Food, wie z. B. Maischips, Tortillas, Tacohüllen, wobei gemahlenes Getreide mit Wasser vermischt, diese Mischung erwärmt und die Masse dann abgekühlt wird, **dadurch gekennzeichnet,** daß die Erwärmung der Mischung auf eine Temperatur zwischen 50 °C und 70 °C, also nur etwas oberhalb der Geliertemperatur der Mehlstärke erfolgt, und die Abkühlung der Masse bereits nach nur teilweiser Gelierung der Mehlstärke eingeleitet wird.

2. Verfahren nach Anspruch 1, **dadurch gekennzeichnet,** daß die Mischung auf eine Temperatur von 58 °C erwärmt wird.

3. Verfahren nach Anspruch 1 oder 2, **dadurch gekennzeichnet,** daß Mischen der Zutaten zu einer homogenen Masse (Mischphase) bei Raumtemperatur erfolgt.

4. Verfahren nach einem der vorhergehenden Ansprüche, dadurch gekennzeichnet, daß der Ausgangsmischung Kalk, vorzugsweise Calciumhydroxyd zugegeben wird zur Einstellung des pH-Wertes des Teiges auf 9,0 bis 11,0.

5. Verfahren nach einem der vorhergehenden Ansprüche, dadurch gekennzeichnet, daß die Erwärmung der Mischung vorwiegend durch von Mischwerkzeugen in die Mischung eingebrachte Reibungswärme erfolgt.

6. Verfahren nach einem der Ansprüche 1 bis 4, dadurch gekennzeichnet, daß die Erwärmung der Mischung durch direkte Einleitung von Dampf in die Mischung erfolgt.

7. Verfahren nach einem der vorhergehenden Ansprüche, dadurch gekennzeichnet, daß sich an die Mischphase eine Haltezeit (erste Haltezeit) anschließt.

8. Verfahren nach einem der vorhergehenden Ansprüche, dadurch gekennzeichnet, daß nach dem Erreichen der Geliertemperatur eine Haltezeit (zweite Haltezeit) vorgesehen wird.

9. Verfahren nach einem der vorhergehenden Ansprüche, dadurch gekennzeichnet, daß die Abkühlung auf eine Temperatur < 50 °C erfolgt.

10. Verfahren nach einem der vorhergehenden Ansprüche, dadurch gekennzeichnet, daß die Abkühlung durch Anlegen eines Vakuums und Hinzuschaltung eines Kondensators erfolgt.

11. Verfahren nach einem der vorhergehenden Ansprüche, dadurch gekennzeichnet, daß die Masse während der Abkühlphase mit rotierenden Mischwerkzeugen beaufschlagt wird.

12. Verfahren nach Anspruch 11, dadurch gekennzeichnet, daß die Mischbeaufschlagung in Intervallen erfolgt.

13. Verfahren nach einem der vorhergehenden Ansprüche, dadurch gekennzeichnet, daß der Ausgangsmischung nur ein Teil der Rezeptwassermenge und die restliche Wassermenge erst in der Kühlphase zugegeben werden.

14. Verfahren zur Herstellung eines Maisteiges nach einem der vorhergehenden Ansprüche, dadurch gekennzeichnet, daß gemahlener Mais in einer Mischung aus feinem Mehl und Partikeln bis zu 2 mm Durchmesser verwendet wird.

15. Verfahren nach Anspruch 14, dadurch gekennzeichnet, daß das Mischen der Zutaten zu einer homogenen Masse (Mischphase) mit schnell umlaufenden Mischwerkzeugen über einen Zeitraum von < 1 Minute erfolgt.

16. Verfahren nach den Ansprüchen 7 und 14 oder 15, dadurch gekennzeichnet, daß die erste Haltezeit etwa 5 bis 10 Minuten beträgt.

17. Verfahren nach den Ansprüchen 8 und 14, 15 oder 16, dadurch gekennzeichnet, daß die zweite Haltezeit bis zu 5 Minuten beträgt.

18. Verfahren nach einem der vorhergehenden Ansprüche, gekennzeichnet durch die Herstellung eines kalten, dichten, etwas kohäsiven, aber nicht klebrigen, maschinenfreundlichen Teiges mit einem Feuchtigkeitsgehalt von etwa 46 % bis 52 % und einem pH-Wert von 9,0 bis 11,0.

19. Verfahren nach einem der Ansprüche 1 bis 3 und 5 bis 18, dadurch gekennzeichnet, daß der Ausgangsmischung eine nahrungsmittelgeeignete Säure, z. B. Phosphor-, Fumar-, Zitronen-, Äpfel- und Ascorbinsäure, oder eine in vergleichbarer Weise auf die Hydroxylgruppe der Stärke einwirkende Verbindung wie z. B. Epichlorhydrin, Phosphoroxychlorid, Acrolein, Natriumtrimetaphosphat, Bernsteinsäureanhydrid, Adipinanhydrid, Essigester und Hydroxypropylester zugegeben wird.

20. Verfahren nach Anspruch 19, dadurch gekennzeichnet, daß der Ausgangsmischung bezogen auf deren Gewicht etwa 0,4 Gew.% einer 75 %igen nahrungsmittelgeeigneten Säure zugegeben wird.

21. Verfahren nach Anspruch 19 oder 20, dadurch gekennzeichnet, daß während der Erwärmung der Mischung Calciumhydroxid zugegeben wird.

22. Verfahren nach Anspruch 21, dadurch gekennzeichnet, daß der Mischung bezogen auf ihr Gewicht etwa 0,3 Gew.% Calciumhydroxid zugegeben wird.

23. Verfahren nach Anspruch 21 oder 22, dadurch gekennzeichnet, daß die Zugabe von Calciumhydroxid bei einer Temperatur der Mischung von etwa 57 °C erfolgt, und daß anschließend die Erwärmung fortgeführt wird bis zu einer Mischungstemperatur von etwa 61 °C.

24. Verfahren nach einem der Ansprüche 1 bis 18, dadurch gekennzeichnet, daß der Ausgangsmischung Calciumhydroxid zugegeben wird, und daß während der Erwärmung der Mischung Fumarsäure zugegeben wird.

25. Verfahren nach Anspruch 24, dadurch gekennzeichnet, daß die Zugabe von Fumarsäure bei einer Temperatur der Mischung von etwa 52 °C erfolgt, und daß anschließend die Erwärmung fortgeführt wird bis zu einer Mischungstemperatur von etwa 65 °C.

26. Verfahren nach einem der Ansprüch 19 bis 25, dadurch gekennzeichnet, daß der pH-Wert des Teiges auf 3,5 - 11,0, vorzugsweise auf 6,0 - 8,0 eingestellt wird.

## Claims

1. Method of preparing dough, in particular a corn dough for producing snack foods such as, for example, corn crisps, tortillas, taco shells, whereby ground cereal is mixed with water, said mixture is heated and the paste is then cooled, **characterized in that** heating of the mixture is effected to a temperature between 50°C and 70°C, i.e. only slightly above the gel point of the flour starch, and cooling of the paste is already initiated after only partial gelling of the flour starch.

2. Method according to claim 1**, characterized in that** the mixture is heated to a temperature of 58°C.

3. Method according to claim 1 or 2, **characterized in that** mixing of the ingredients into a homogeneous paste (mixing phase) is effected at room temperature.

4. Method according to one of the preceding claims, characterized in that lime, preferably calcium hydroxide, is added to the initial mixture to set the pH value of the dough to 9.0 to 11.0.

5. Method according to one of the preceding claims, characterized in that heating of the mixture is effected predominantly by friction heat introduced into the mixture by the mixing tools.

6. Method according to one of claims 1 to 4, characterized in that heating of the mixture is effected by introducing steam directly into the mixture.

7. Method according to one of the preceding claims, characterized in that the mixing phase is followed by a retention time (first retention time).

8. Method according to one of the preceding claims, characterized in that, after attainment of the gel point, a retention time (second retention time) is provided.

9. Method according to one of the preceding claims, characterized in that cooling is effected to a temperature < 50 °C.

10. Method according to one of the preceding claims, characterized in that the cooling is effected by applying a vacuum and additional connection of a condenser.

11. Method according to one of the preceding claims, characterized in that the paste is acted upon during the cooling phase by rotating mixing tools.

12. Method according to claim 11, characterized in that the mixing action is effected at intervals.

13. Method according to one of the preceding claims, characterized in that only some of the water quantity of the recipe is added to the initial mixture and the remaining water quantity is not added until during the cooling phase.

14. Method of manufacturing a corn dough according to one of the preceding claims, characterized in that ground corn is used in the form of a mixture of fine flour and particles of up to 2 mm in diameter.

15. Method according to claim 14, characterized in that mixing of the ingredients to a homogeneous paste (mixing phase) is effected with high-speed mixing tools for a period of < 1 minute.

16. Method according to claims 7 and 14 or 15, characterized in that the first retention time is about 5 to 10 minutes.

17. Method according to claims 8 and 14, 15 or 16, characterized in that the second retention time is up to 5 minutes.

18. Method according to one of the preceding claims, characterized by the manufacture of a cold, dense, slightly cohesive but not sticky, machine-friendly dough with a moisture content of around 46% to 52% and a pH value of 9.0 to 11.0.

19. Method according to one of claims 1 to 3 and 5 to 18, characterized in that there is added to the initial mixture a foodstuff-compatible acid, e.g. phosphoric, fumaric, citric, malic and ascorbic acid, or a compound acting in a comparable manner upon the hydroxyl group of the starch such as, for example, epichlorohydrin, phosphorus oxychloride, acrolein, sodium trimetaphosphate, succinic anhydride, adipic anhydride, acetic ester and hydroxypropyl ester.

20. Method according to claim 19, characterized in that there is added to the initial mixture in relation to its weight about 0.4% by weight of a 75% foodstuff-compatible acid.

21. Method according to claim 19 or 20, characterized in that calcium hydroxide is added to the mixture during heating.

22. Method according to claim 21, characterized in that there is added to the mixture in relation to its weight about 0.3% by weight of calcium hydroxide.

23. Method according to claim 21 or 22, characterized in that the addition of calcium hydroxide is effected at a temperature of the mixture of around 57°C, and that heating is then continued up to a mixture temperature of around 61°C.

24. Method according to one of claims 1 to 18, characterized in that calcium hydroxide is added to the initial mixture, and that fumaric acid is added to the mixture during heating.

25. Method according to claim 24, characterized in that the addition of fumaric acid is effected at a temperature of the mixture of around 52°C, and that heating is then continued up to a mixture temperature of around 65°C.

26. Method according to one of claims 19 to 25, characterized in that the pH value of the dough is set at 3.5 to 11.0, preferably at 6.0 to 8.0.

## Revendications

1. Procédé de préparation de pâte, en particulier pâte de maïs pour la fabrication de la nourriture de brasserie, comme par exemple les chips de maïs, les tortillas, les fonds de tortillas, où l'on mélange du grain moulu avec de l'eau, on chauffe ce mélange puis la masse est refroidie, caractérisé en ce que l'on chauffe le mélange à une température comprise entre 50°C et 70°C, c'est-à-dire juste un peu au dessus de la température de solidité de la farine, et l'on introduit le refroidissement de la masse après perte partielle de la solidité consistance de la farine.

2. Procédé selon la revendication 1, caractérisé en ce que l'on chauffe le mélange à une température de 58°C.

3. Procédé selon la revendication 1 ou 2, en ce que le mélange des ingrédients en une masse homogène (phase mélangée) a lieu à température ambiante.

4. Procédé selon l'une des revendications précédentes, caractérisé en ce que l'on ajoute au mélange de départ de la chaux, de préférence de l'hydroxyde de calcium pour ajuster le pH de la pâte à 9,0 à 11,0.

5. Procédé selon l'une des revendications précédentes, caractérisé en ce que l'on échauffe le mélange de manière prépondérante avec de la chaleur de friction introduite dans le mélange par des outils de mélange.

6. Procédé selon l'une des revendications 1 à 4, caractérisé en ce que l'on échauffe le mélange en introduisant directement de la vapeur (d'eau) dans le mélange.

7. Procédé selon l'une des revendications précédentes, caractérisé en ce que la phase de mélange est suivie (directement) par un temps de repos (premier temps de repos).

8. Procédé selon l'une des revendications précédentes, caractérisé en ce qu'il est prévu un temps de repos (second temps de repos) après que la température de perte a été atteinte.

9. Procédé selon l'une des revendications précédentes, caractérisé en ce que l'on effectue le refroidissement jusqu'à une température inférieure à 50°C.

10. Procédé selon l'une des revendications précédentes, caractérisé en ce que l'on mène le refroidissement en appliquant un vide et en raccordant un condenseur.

11. Procédé selon l'une des revendications précédentes, caractérisé en ce que pendant la phase de refroidissement on soumet la masse à l'action d'outils mélangeurs rotatifs.

12. Procédé selon la revendication 11, caractérisé en ce que l'action de mélange a lieu par intervalle.

13. Procédé selon l'une des revendications précédentes, caractérisé en ce que l'on n'ajoute au mélange de départ qu'une partie de la quantité d'eau prévue par la recette, et l'on ajoute la quantité d'eau restante seulement pendant la phase de refroidissement.

14. Procédé pour fabriquer une pâte de maïs selon l'une des revendications précédentes, caractérisé en ce que l'on utilise du maïs moulu dans un mélange de farine fine et de particules jusqu'à 2mm de diamètre.

15. Procédé selon la revendication 14, caractérisé en ce que l'on mélange les ingrédients en une masse homogène (phase de mélange) avec des outils rotatifs à grande vitesse sur une durée inférieure à une minute.

16. Procédé selon les revendications 7 et 14 ou 15, caractérisé en ce que le premier temps de repos est d'environ 5 à 10 minutes.

17. Procédé selon l'une des revendications 8 et 14, 15 ou 16, caractérisé en ce que le second temps de repos peut aller jusqu'à 5 minutes.

18. Procédé selon l'une des revendications précédentes, caractérisé par la fabrication d'une pâte froide, épaisse, légèrement cohérente mais non collante, propice au traitement en machine avec une teneur en eau d'environ 46 % à 52 % et un pH de 9,0 à 11,0.

19. Procédé selon l'une des revendications 1 à 3 et 5 à 18, caractérisé en ce qu'on ajoute au mélange de départ un acide alimentaire, par exemple acide ascorbique, , citrique, fumarique, phosphorique, ou une liaison agissant d'une manière comparable sur le groupe hydroxyde de la , comme par exemple l'épichlorydrine, l'oxychlorure de phosphore, l'acroléine, le trimetaphosphate de sodium, l'anydrure d'acide de , l'anydrure adipeux, l'esther de vinaigre, et l'hydroxypropilesther.

20. Procédé selon la revendication 19, caractérisé en ce qu'on ajoute au mélange de départ, par rapport à son poids, environ 0,4 % en poids d'un acide alimentaire à 75 %.

21. Procédé selon la revendication 18 ou 19, caractérisé en ce qu'on ajoute de l'hydroxyde de calcium au mélange pendant son échauffement.

22. Procédé selon la revendication 21, caractérisé en ce qu'on ajoute au mélange, par rapport à son poids, environ 0,3 % en poids d'hydroxyde de calcium.

23. Procédé selon la revendication 21 ou 22, caractérisé en ce que l'apport d'hydroxyde de calcium a lieu à une température d'environ 57 °C du mélange, et en ce qu'ensuite on poursuit l'échauffement jusqu'à ce que le mélange atteigne une température d'environ 61°C.

24. Procédé selon l'une des revendications 1 à 18, caractérisé en ce qu'on ajoute de l'hydroxyde de calcium au mélange de départ et en ce qu'on ajoute de l'acide fumarique pendant l'échauffement du mélange.

25. Procédé selon la revendication 24, caractérisé en ce que l'apport d'acide fumarique a lieu lorsque le mélange est à une température d'environ 52°C, et en ce qu'ensuite on poursuit l'échauffement du mélange jusqu'à ce que le mélange atteigne une température d'environ 65°C.

26. Procédé selon l'une des revendications 19 à 25, caractérisé en ce qu'on ajuste le pH de la pâte à 3,5 à 11,0, de préférence à 6,0 à 8,0.
